# EUROPÄISCHE PATENTANMELDUNG

(11) **EP 1 329 971 A2**
(43) Veröffentlichungstag der Anmeldung: **23.07.2003**
(21) Anmeldenummer: 02029001.1
(22) Anmeldetag: 27.12.2002
(51) Int. Cl.: H01M 8/04, H01M 8/10, H01M 8/24

(54) **Brennstoffzelle mit einem Innenraum, in dem ein Gasspeicher angeordnet ist**

(30) Priorität: 04.01.2002 DE 10200222
(71) Anmelder: H2-Interpower Brennstoffzellensysteme GmbH, 91126 Schwabach (DE)
(72) Erfinder: Ruthrof, Klaus, 90489 Nürnberg (DE); Gunkel, Christian, 91126 Schwabach (DE); Grosser, Armin, 91154 Roth (DE)
(74) Vertreter: Patentanwälte Rehberg + Hüppe

(57) **Zusammenfassung**

Eine Brennstoffzelle (1) weist einen Innenraum (11) auf, der von einem Rohrkörper (2) begrenzt ist und in dem ein Gasspeicher (12) angeordnet ist. Dabei ist auf dem Rohrkörper (2) ein Schichtaufbau (3) mit einer zentralen Protonenaustauschmembran (5), mit die Protonenaustauschmembran (5) beidseitig bedeckenden Diffusorschichten (6, 7) und mit rückwärtig an die Diffusorschichten (6, 7) angedrückten Flächenelektroden (8, 9) angeordnet. Der Gasspeicher (12) versorgt die zwischen dem Rohrkörper (2) und der Protonenaustauschmembran (5) angeordnete Diffusorschicht (6) mit einem Reaktionsgas. Der zylindrische Innenraum (11) ist bis auf mindestens eine Gasdurchtrittspassage (14) zu der Diffusorschicht (16) gasdicht geschlossen, wobei er an einem Ende des Rohrkörpers durch eine elastisch verformbare Membran (16) begrenzt ist. Der Membran 16 ist ein Betätigungselement (22) zugeordnet, das auf ein Ventilelement eines Auslassventils (13) des Gasspeichers (12) einwirkt, das Reaktionsgas in den Innenraum (11) auslässt.

## Beschreibung

Die Erfindung bezieht sich auf eine Brennstoffzelle mit einem Innenraum, der von einem Rohrkörper begrenzt ist und in dem ein Gasspeicher angeordnet ist, wobei auf dem Rohrkörper ein Schichtaufbau mit einer zentralen Protonenaustauschmembran, mit die Protonenaustauschmembran beidseitig bedeckenden Diffusorschichten und mit rückwärtig an die Diffusorschichten angedrückten Flächenelektroden angeordnet ist und wobei der Gasspeicher die zwischen dem Rohrkörper und der Protonenaustauschmembran angeordnete Diffusorschicht mit einem Reaktionsgas versorgt.

Das Gebiet der Erfindung sind Brennstoffzellen, deren Schichtaufbau zylindermantelförmig oder wickelförmig ist, wobei jeweils ein Rohrkörper vorgesehen ist, der als Kern für den Schichtaufbau dient. Im Inneren des Rohrkörpers liegt ein Innenraum, der zur Anordnung eines Gasspeichers genutzt werden kann. Typischerweise handelt es sich bei dem in dem Gasspeicher gespeicherten Reaktionsgas um Wasserstoff. Konkret kann es sich um einen einfachen Wasserstoffdruckspeicher handeln. Bevorzugt und zur Speicherung von Wasserstoff üblich sind aber Metallhydridspeicher.

Der im letzten Absatz beschriebene Aufbau ist an sich bekannt. Ungelöst ist dabei die Regelung der Reaktionsgasversorgung der Brennstoffzelle aus dem Gasspeicher.

Als Druckgasflaschenventile sind Membranventile bekannt, bei denen der Umgebungsluftdruck auf eine Membran einwirkt. Der Membran ist ein Betätigungselement zugeordnet. Mit Hilfe des so durch den Umgebungsdruck beaufschlagten Betätigungselements steht der Umgebungsdruck als Referenzgröße in dem Membranventil zur Verfügung, um beispielsweise unabhängig von dem absoluten Umgebungsdruck einen bestimmten relativen Überdruck in einer Leitung einzustellen. Ein übliches Membranventil könnte aber allein aufgrund seiner Größe nicht in dem Innenraum eines Rohrkörpers einer Brennstoffzelle der eingangs beschriebenen Art untergebracht werden, um dort die Gasabgabe durch das Auslassventil des Gasspeichers zu regeln, wenn dieser Innenraum kleinere Abmessungen aufweist als ein solches Membranventil, wie dies beispielsweise bei Brennstoffzellen der Fall ist, die von ihren Gesamtabmessungen beispielsweise zylinderförmigen Mono-Batterien entsprechen.

Der Erfindung liegt von daher die Aufgabe zugrunde, eine Brennstoffzelle der eingangs beschriebenen Art mit einer einfachen aber effektiven Regelung für den Reaktionsgasaustritt aus dem Gasspeicher bereitzustellen.

Erfindungsgemäß wird diese Aufgabe bei einer Brennstoffzelle der eingangs beschriebenen Art dadurch gelöst, dass der zylindrische Innenraum bis auf mindestens eine Gasdurchtrittspassage zu der Diffusorschicht zwischen dem Rohrkörper und der Protonenaustauschmembran gasdicht abgeschlossen ist, wobei er an einem Ende des Rohrkörpers durch eine elastisch verformbare Membran begrenzt ist, und dass der Membran ein Betätigungselement zugeordnet ist, das auf ein Ventilelement eines Auslassventils des Gasspeichers einwirkt, das Reaktionsgas in den Innenraum auslässt.

Bei der neuen Brennstoffzelle ist der Innenraum des Rohrkörpers Teil des Leitungssystems für die Gasversorgung der benachbarten Diffusorschicht. Dabei wird er an dem einen Ende von der verformbaren Membran verschlossen. D.h., die Membran verformt sich in Abhängigkeit von einer Druckdifferenz zwischen dem Innenraum des Rohrkörpers und der Umgebung. Wenn die Brennstoffzelle das Brenngas verbraucht, welches in dem Innenraum vorliegt, sinkt der Druck in dem Innenraum relativ zu dem Umgebungsdruck ab. Entsprechend verformt sich die Membran und verschiebt das ihr zugeordnete Betätigungselement. Das Betätigungselement wirkt wiederum auf das Ventilelement des Ausgangsventils des Gasspeichers ein, so dass das Auslassventil geöffnet wird und Reaktionsgas aus dem Gasspeicher in den Innenraum nachströmt. Sobald auf diese Weise der Druck im Innenraum des Rohrkörpers wieder ansteigt, bewegt sich die Membran zurück und nimmt dabei das Betätigungselement mit oder gibt dieses zumindest frei, so dass sich in der Folge das Auslassventil des Gasspeichers wieder schließt. Damit ist eine einfache mechanische Regelung für die Versorgung der dem Rohrkörper benachbarten Diffusorschicht mit Reaktionsgas gegeben. Die im Betrieb der Brennstoffzelle erreichten Druckunterschiede in dem Innenraum sind bei der realisierbaren, vergleichsweise großen Größe der Membran völlig ausreichend, um das Auslassventil eine üblichen Gasspeichers zuverlässig zu betätigen. Dabei ist auch ein vergleichsweise großes abgedichtetes Volumen des Innenraums in dem Rohrkörper neben dem Gasspeicher nicht von Nachteil. Vielmehr stellt es bei der üblichen Differenz zwischen einer notwendigen Öffnungskraft auf das Ventilelement des Auslassventils und der dann aufrecht zu erhaltenden Offenhaltekraft sicher, dass es zu keinem Ventilflattern oder anderen unerwünschten unkontrollierten Zuständen der Gesamtanordnung kommt. Vielmehr wird es immer so sein, dass entweder das Auslassventil des Gasspeichers auf einem gewissen Öffnungsgrad gehalten wird oder das Auslassventil definiert für begrenzte Zeiträume öffnet, um den Innenraum wieder mit Reaktionsgas aufzufüllen.

Auch bei der neuen Brennstoffzelle kann der Gasspeicher in dem Innenraum des Gasspeichers ein Metallhydridspeicher für Wasserstoff sein.

Auch für Sauerstoff kann grundsätzlich ein Gasspeicher vorhanden sein. Es ist aber bevorzugt, dass die andere Diffusorschicht bei der neuen Brennstoffzelle mit Sauerstoff aus der Umgebungsluft beatmet wird.

Bei der neuen Brennstoffzelle ist die Membran entweder insich elastisch oder elastisch abgestützt. Dies bedeutet, dass ihre jeweilige Auslenkung einen bestimmten Differenzdruck zwischen dem Innenraum des Rohrkörpers und der Umgebung entspricht. Durch Variation des Abstands des Gasspeichers zu der Membran kann so letztlich der Relativdruck in dem Innenraum des Rohrkörpers eingestellt werden, bei dem das Auslassventil des Gasspeichers geöffnet wird, um Reaktionsgas nachzufüllen. Vorzugsweise ist hierzu ein Widerlager für den Gasspeicher in dem Innenraum vorgesehen, dessen Abstand zu der Membran einstellbar ist.

Besonders bevorzugt ist es, wenn dieser Abstand von außerhalb des Innenraums einstellbar ist. Beispielsweise kann hierzu an dem der Membran gegenüberliegenden Ende des Rohrkörpers ein Drehelement von außerhalb des Innenraums zugänglich sein. Dieses Drehelement kann nicht nur dazu genutzt werden, eine bestimmte Reaktionsgasversorgung der Brennstoffzelle einzustellen, sonder auch, um die Brennstoffzelle grundsätzlich zu aktivieren oder zu deaktivieren, indem der Gasspeicher auf die Membran vorgeschoben wird oder seine Abstützung zurückgenommen wird, so dass er der sich verformenden Membran ausweichen kann.

Es versteht sich, dass für dieses Drehelement eine abgedichtete Durchführung von außerhalb des Innenraums in den Innenraum vorgesehen sein muss, damit kein unerwünschter Verlust an Reaktionsgas auftritt.

Um Druckunterschiede zwischen dem Innenraum des Rohrkörpers und der Umgebung besonders sensibel zu erfassen, ist es bevorzugt, wenn die Membran den wesentlichen Querschnitt des Innenraums an dem einen Ende abdeckt.

Der in dem Innenraum des Rohrkörpers durch Verbrauch von Reaktionsgas durch die Brennstoffzelle erzielbare relative Unterdruck hängt erheblich davon ab, ob sich neben dem Reaktionsgas noch andere Gase in dem Innenraum befinden. Je weniger andere Gase vorhanden sind, desto größer kann der Unterdruck in dem Innenraum beim Verbrauch des Reaktionsgases werden. Dies bedeutet eine Vereinfachung bei der Betätigung des Auslassventils des Gasspeichers durch das der Membran zugeordnete Betätigungselement. Mit anderen Worten ist es bevorzugt, wenn der Innenraum des Rohrkörpers bis auf das Reaktionsgas evakuiert ist.

Die Erfindung wird im folgenden anhand von Ausführungsbeispielen näher erläutert und beschrieben, dabei zeigt:
Fig. 1 einen Längsschnitt durch eine erste Ausführungsform der neuen Brennstoffzelle und
Fig. 2 Details einer zweiten Ausführungsform der neuen Brennstoffzelle.

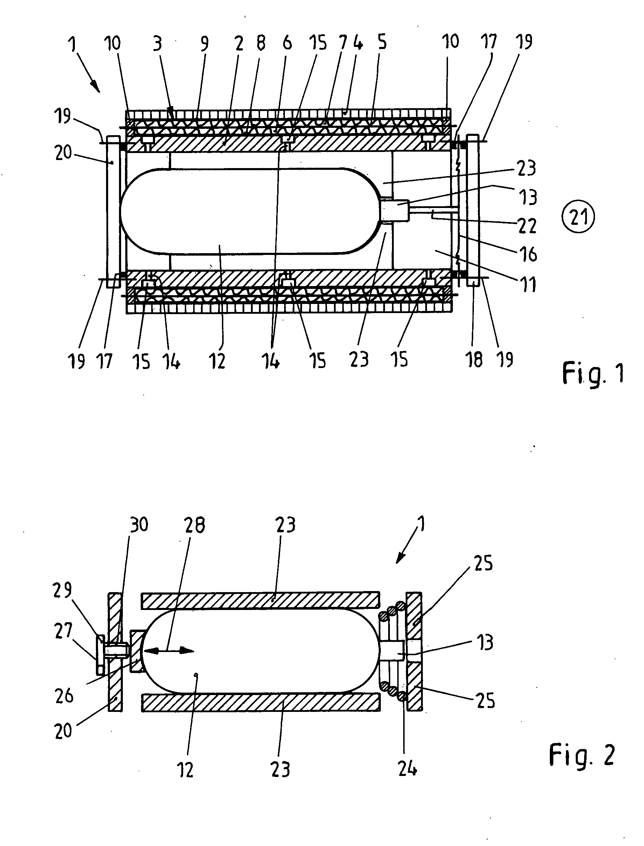

Die in Fig. 1 dargestellte Brennstoffzelle 1 weist einen Rohrkörper 2 auf, auf dem ein umlaufend geschlossener Schichtaufbau 3 angeordnet ist. Abgedeckt wird der Schichtaufbau 3 durch einen mit hier nicht näher dargestellten Durchbrechungen versehenen Zylindermantel 4, der den Schichtaufbau 3 an den Rohrkörper 2 andrückt und dabei zusammendrückt. Diese Andrückkraft ist für die Funktion der Brennstoffzelle 1 von Bedeutung, deren wesentliche Bestandteile in dem Schichtaufbau 3 zu finden sind. In der Mitte des Schichtaufbaus 3 liegt eine Protonenaustauschmembran 5. Hierzu sind eine innere Diffusorschicht 6 und eine äußere Diffusorschicht 7 koaxial angeordnet. Die Diffusorschichten 6 und 7 stützen sich an einer inneren Flächenelektrode 8 und einer äußeren Flächenelektrode 9 ab, die wiederum koaxial angeordnet sind. Die Anpresskraft der Flächenelektroden 8 und 9 an die Diffusorschichten 6 und 7 bestimmt den elektrischen Innenwiderstand der Brennstoffzelle über die Protonenaustauschmembran 5. Deshalb ist es wichtig, den Schichtaufbau 3 zwischen dem Rohrkörper 2 und dem Zylindermantel 4 radial zusammenzudrücken. Im axialen Randbereich ist der Schichtaufbau 3 einschließlich des Rohrkörpers 2 und des Zylindermantels 4 mit Abdichtungen 10 versehen. Die Abdichtungen 10 verhindern, dass sich die Reaktionsgase der Brennstoffzelle 1 neben der Protonenaustauschmembran 5 miteinander vermischen, was bei Einsatz von Wasserstoff und Sauerstoff zu der gefährlichen Knallgasbildung führen würde.

Zur Versorgung der Brennstoffzelle 1 mit Reaktionsgasen, also typischerweise mit Wasserstoff und Sauerstoff, um in der Brennstoffzelle 1 Strom zu erzeugen, der über die Flächenelektroden 8 und 9 abgeleitet wird, ist in einem Innenraum 11 des Rohrkörpers ein Gasspeicher 12 für Wasserstoff vorgesehen, um Wasserstoff in die Diffusorschicht 6 einzuleiten. Demgegenüber ist die Brennstoffzelle 1 zu ihrer Sauerstoffversorgung luftatmend, d.h. es wird Umgebungsluft verwendet, um die Diffusorschicht 7 mit Sauerstoff zu versorgen. Hierzu sind die Flächenelektrode 9 und der angrenzende Zylindermantel 4 mit hier nicht näher dargestellten Durchbrechungen versehen. Der Wasserstoff aus dem Gasspeicher 12, bei dem es sich vorzugsweise um einen Metallhydridspeicher handelt, damit die Speicherkapazität auch bei begrenztem Fülldruck groß ist, tritt aus einem Aulassventil 13 aus dem Gasspeicher 12 aus und zwar in den Innenraum 11 des Rohrkörpers 2, der gegenüber der Umgebung 21 abgedichtet ist. D.h., aus dem Innenraum 11 führen nur Gasdurchtrittspassagen 14, die in ringförmig umlaufende Ringkanäle 15 an der Rückseite der ebenfalls mit Durchbrechungen versehenen Flächenelektrode 8 münden, die die Diffusorschicht 6 abstützt. Um die aus dem Auslassventil 13 austretende Reaktionsgasmenge zu regeln, ist bei der Brennstoffzelle 1 an einem Ende des Rohrkörpers 2 eine in sich elastisch verformbare Membran 16 vorgesehen, die den gesamten Querschnitt des Innenraums 11 abdeckt. Die Membran 16 wird unter Zwischenordnung von Dichtungen 17 über einen Haltering 18 an den Rohrkörper 2 angedrückt. Hierzu sind in Fig. 1 nur angedeutet Schrauben 19 vorgesehen. An dem gegenüberliegenden Ende ist der Rohrkörper 2 durch eine Abdeckplatte 20 verschlossen, wobei auch hier eine Dichtung 17 zwischengeordnet ist und die Abdeckplatte 20 durch Schrauben 19 an dem Rohrkörper 2 gehalten wird. So ist der Innenraum des Rohrkörpers 11, wie bereits erwähnt, bis auf die Gasdurchtrittspassagen 14 gegenüber der Umgebung 21 abgedichtet. Dies führt dazu, dass, wenn der Innenraum 11 im wesentlichen mit Reaktionsgas gefüllt ist, das von der Brennstoffzelle 1 beim Erzeugen von Strom verbraucht wird, der Druck in dem Innenraum 11 gegenüber der Umgebung 21 deutlich abnimmt und sich in der Folge die Membran 16 elastisch verformt. Dabei beaufschlagt die Membran 16 ein ihr zugeordnetes Betätigungselement 22, das auf ein hier nicht näher dargestelltes Ventilelement des Auslassventils 13 des Gasspeichers 12 einwirkt, bis das Auslassventil 13 geöffnet ist und Reaktionsgas aus dem Gasspeicher 12 in dem Innenraum 11 nachströmt. Wenn sich in dem Innenraum 1 wieder ein größerer Druck aufbaut, geht die Verformung der Membran 16 zurück, bis das Betätigungselement 22 soweit zurückgenommen ist, dass das Auslassventil 13 wieder schließt. Bei dieser Funktion ist es nicht von Nachteil, wenn das Reaktionsgas aus dem Gasspeicher 12 den gesamten Innenraum 11 des Rohrkörpers 2 ausfüllen kann. Es ist aber auch möglich, das Reaktionsgas nur auf einen Teil des Innenraums angrenzend an die Membran 16 zu beschränken. Die Funktion der Brennstoffzelle 1 ändert sich hierdurch nicht, außer dass das Puffervolumen des Innenraums 11 für das Reaktionsgas kleiner wird. In Fig. 1 sind Lagerelemente 23 für den Gasspeicher 12 so ausgebildet, dass sie für das Reaktionsgas aus dem Gasspeicher 12 kein Hindernis darstellen. Sie dienen nur zur Fixierung des Gasspeichers 12 in einer definierten Relativstellung zu der Membran 16 bzw. dem Betätigungselement 22, damit das Auslassventil 13 bei definierten Relativdrücken zwischen dem Innenraum 11 und der Umgebung 21 geöffnet bzw. geschlossen wird.

Um diese Öffnungs- bzw. Schließpunkte variabel zu gestalten, kann der in Fig. 2 in Form seiner von Fig. 1 abweichenden Details skizzierte Aufbau gewählt werden. Hier wird der Gasspeicher 12 von einer Feder 24 auf die Abdeckplatte 20 hin beaufschlagt, wobei sich die Feder spiralförmig um das Auslassventil 13 erstreckt und sich an Widerlagern 25 abstützt. An der Abdeckplatte 20 wiederum ist ein Widerlager 26 für den Gasspeicher 12 abgestützt, dass durch einen Drehhebel 27 in Richtung eines Doppelpfeils 28 verschiebbar ist. Der Drehhebel 27 verdreht eine Stellschraube 29, die in einem Gewinde 30 in der Abdeckplatte 20 geführt ist und dabei auf hier nicht dargestellte Weise gegenüber der Abdeckplatte 20 abgedichtet ist. Durch Heranfahren des Widerlagers 26 an die Abdeckplatte 20 kann der Gasspeicher 12 mit Hilfe der Feder 24 soweit aus dem Einwirkbereich des hier nicht dargestellten Betätigungselements 22 herausgebracht werden, dass das Auslassventil 13 auch bei maximalem Druckunterschied zwischen der Umgebung 21 und dem Innenraum 11 nicht öffnet. Auf diese Weise kann die Brennstoffzelle 1 deaktiviert werden. Umgekehrt kann die Brennstoffzelle 1 aktiviert werden, indem das Widerlager 26 mit dem Drehhebel 27 soweit gegenüber de Abdeckplatte 20 vorgeschoben wird, dass das Aulassventil 13 in den Einwirkbereich des Betätigungselements 22 gemäß Fig. 1 kommt.

Es versteht sich, dass die Druckdifferenzen zwischen dem Innenraum 11 und der Umgebung 21, bei denen das Auslassventil 13 des Gasspeichers 12 geöffnet bzw. geschlossen wird, sehr unterschiedlich gewählt werden können. So kann sowohl das Öffnen als auch das Schließen des Auslassventils 13 bei einem Überdruck in dem Innenraum 11 gegenüber der Umgebung 21 erfolgen. Es kann auch ein Öffnen und ein Schließen des Auslassventils 13 jeweils bei einem Unterdruck in dem Innenraum 11 gegenüber der Umgebung 21 erfolgen. Ebenso ist es möglich, dass das Auslassventil 13 bei einem Unterdruck in dem Innenraum 11 gegenüber der Umgebung 21 geöffnet und bei einem entsprechenden Überdruck geschlossen wird. Dies alles kann durch die relative Lage des Auslassventils 13 zu der Membran 16 bzw. dem Betätigungselement 22 eingestellt werden.

### BEZUGSZEICHENLISTE

- 1 -: Brennstoffzelle
- 2 -: Rohrkörper
- 3 -: Schichtaufbau
- 4 -: Zylindermantel
- 5 -: Protonenaustauschmembran
- 6 -: Diffusorschicht
- 7 -: Diffusorschicht
- 8 -: Flächenelektrode
- 9 -: Flächenelektrode
- 10 -: Abdichtung

- 11 -: Innenraum
- 12 -: Gasspeicher
- 13 -: Auslassventil
- 14 -: Gasdurchtrittspassage
- 15 -: Ringkanal
- 16 -: Membran
- 17 -: Dichtung
- 18 -: Haltering
- 19 -: Schraube
- 20 -: Abdeckplatte

- 21 -: Umgebung
- 22 -: Betätigungselement
- 23 -: Lagerelement
- 24 -: Feder
- 25 -: Widerlager
- 26 -: Widerlager
- 27 -: Drehhebel
- 28 -: Doppelpfeil
- 29 -: Stellschraube
- 30 -: Gewinde

## Patentansprüche

1. Brennstoffzelle mit einem Innenraum, der von einem Rohrkörper begrenzt ist und in dem ein Gasspeicher angeordnet ist, wobei auf dem Rohrkörper ein Schichtaufbau mit einer zentralen Protonenaustauschmembran, mit die Protonenaustauschmembran beidseitig bedeckenden Diffusorschichten und mit rückwärtig an die Diffusorschichten angedrückten Flächenelektroden angeordnet ist und wobei der Gasspeicher die zwischen dem Rohrkörper und der Protonenaustauschmembran angeordnete Diffusorschicht mit einem Reaktionsgas versorgt, **dadurch gekennzeichnet, dass** der zylindrische Innenraum (11) bis auf mindestens eine Gasdurchtrittspassage (14) zu der Diffusorschicht (6) gasdicht geschlossen ist, wobei er an einem Ende des Rohrkörpers (2) durch eine elastisch verformbare Membran (16) begrenzt ist, und dass der Membran (16) ein Betätigungselement (22) zugeordnet ist, das auf ein Ventilelement eines Auslassventils (13) des Gasspeichers (12) einwirkt, das Reaktionsgas in den Innenraum (11) auslässt.

2. Brennstoffzelle nach Anspruch 1, **dadurch gekennzeichnet, dass** der Gasspeicher (12) ein Metallhydridspeicher für Wasserstoff ist.

3. Brennstoffzelle nach Anspruch 1 oder 2, **dadurch gekennzeichnet, dass** die andere Diffusorschicht (7) mit Sauerstoff aus der Umgebungsluft beatmet ist.

4. Brennstoffzelle nach einem der Ansprüche 1 bis 3, **dadurch gekennzeichnet, dass** für den Gasspeicher (12) ein Widerlager (26) in dem Innenraum vorgesehen ist, dessen Abstand zu der Membran (16) einstellbar ist.

5. Brennstoffzelle nach Anspruch 4, **dadurch gekennzeichnet, dass** der Abstand von außerhalb des Innenraums einstellbar ist.

6. Brennstoffzelle nach Anspruch 5, **dadurch gekennzeichnet, dass** an dem der Membran (16) gegenüberliegenden Ende ein Drehelement (27) von außerhalb des Innenraums (11) zugänglich ist, mit dem die Brennstoffzelle (1) ein- und ausschaltbar ist.

7. **Dadurch gekennzeichnet, dass** für das Drehelement (17) eine gasdichte Durchführung vorgesehen ist.

8. Brennstoffzelle nach einem der Ansprüche 1 bis 7, **dadurch gekennzeichnet, dass** die Membran (16) im wesentlichen den gesamten radialen Querschnitt des Innenraums (11) abdeckt.

9. Brennstoffzelle nach einem der Ansprüche 1 bis 8, **dadurch gekennzeichnet, dass** der Innenraum (11) bis auf das Reaktionsgas aus dem Gasspeicher (12) evakuiert ist.

10. Brennstoffzelle nach einem der Ansprüche 1 bis 9, **dadurch gekennzeichnet, dass** sich der gasdicht abgeschlossene Innenraum (11) zumindest über einen Teil der gesamten axiale Länge des Rohrkörpers (2) erstreckt.
